# EUROPEAN PATENT APPLICATION

(11) **EP 3 486 716 A1**
(43) Date of publication of application: **22.05.2019**
(21) Application number: 17823007.4
(22) Date of filing: 15.06.2017
(51) Int. Cl.: G02F 1/1343

(54) **LIQUID CRYSTAL GRATING AND CONTROL METHOD THEREFOR**

(30) Priority: 18.07.2016 CN 201610566830
(71) Applicant: BOE Technology Group Co., Ltd., Beijing 100015 (CN)
(72) Inventor: WANG, Qian, Beijing 100176 (CN); DONG, Xue, Beijing 100176 (CN); CHEN, Xiaochuan, Beijing 100176 (CN); ZHAO, Wenqing, Beijing 100176 (CN)
(74) Representative: Hoffmann Eitle
(86) International application number: PCT/CN2017/088476
(87) International publication number: WO 2018/014681

(57) **Abstract**

Embodiments of the present disclosure relate to a liquid crystal grating and a method for controlling the same. The liquid crystal grating includes: a first polarizer and a second polarizer arranged opposite to each other; a liquid crystal layer arranged between the first polarizer and the second polarizer; a plurality of first electrodes disposed on a side of the first polarizer adjacent to the liquid crystal layer; and a second electrode disposed on a side of the second polarizer adjacent to the liquid crystal layer, wherein, a width of each first electrode of the plurality of first electrodes is at nanoscale. The liquid crystal grating provided in embodiments of the present disclosure has a grating constant of nanometers, and then is able to produce interference and diffraction of light.

## Description

### CROSS-REFERENCE TO RELATED APPLICATION

This application claims priority and benefit to Chinese Patent Application No. 201610566830.X filed on July 18, 2016, the entirety of which is incorporated herein by reference.

### TECHNICAL FIELD

The embodiments of the present disclosure relate to a field of crystal optics, more particularly, to a liquid crystal grating and a method for controlling the same.

### BACKGROUND

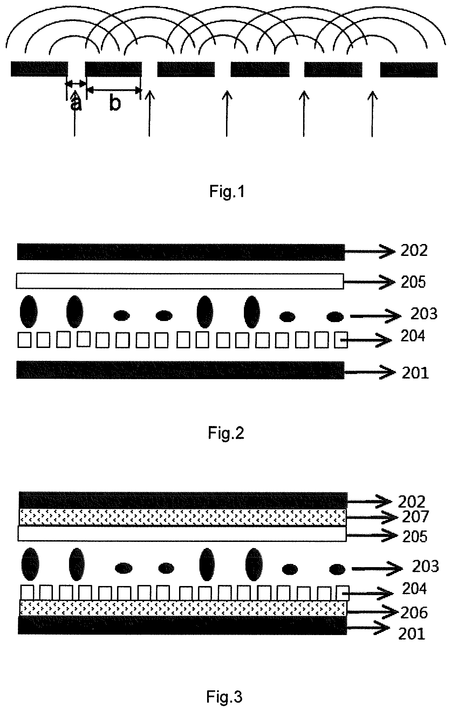

A grating is an optical device consisting of a large number of equal-width and evenly spaced parallel slits. The grating is not only used in spectroscopy, but also widely used in measurement, optical communication, information processing, display, etc. Typically, the grating is made by etching a series of equal-width and evenly spaced parallel slits on an opaque baffle. Regions each of which is corresponding to a slit of the series of slits are light-transmitting regions, and other regions each of which is between two adjacent slits of the series of slits are light-shielding regions. As shown in Fig. 1, a slit that transmits light has a width of a, and a region between two adjacent slits has a width of b. And then a grating constant is d=a+b. When a light is irradiated onto the grating, either interference fringes alternate with brightness and darkness, or diffraction fringes alternate with brightness and darkness or both are formed due to diffraction and interference by the parallel slits of the grating.

### SUMMARY

The embodiments of the present disclosure provide a liquid crystal grating and a method for controlling the same. A grating constant of the liquid crystal grating is in the order of nanometers, and then light interference and diffraction may be achieved

According to a first aspect of the present disclosure, a liquid crystal grating is provided, which includes:
a first polarizer and a second polarizer arranged opposite to each other;
a liquid crystal layer arranged between the first polarizer and the second polarizer;
a plurality of first electrodes disposed on a side of the first polarizer adjacent to the liquid crystal layer; and
a second electrode disposed on a side of the second polarizer adjacent to the liquid crystal layer,
wherein, a width of each first electrode of the plurality of first electrodes is at nanoscale.

In one embodiment, the liquid crystal grating also includes a control unit configured to control voltage signals applied respectively to the plurality of first electrodes and the second electrode, so as to deflect liquid crystal molecules in the liquid crystal layer, to form a plurality of light-transmitting regions and a plurality of light-shielding regions arranged alternately.

In one embodiment, the control unit is further configured to, by controlling the voltage signal applied respectively to the plurality of first electrodes, change the number of first electrodes of the plurality of first electrodes corresponding to a light-transmitting region of the plurality of light-transmitting regions and the number of first electrodes of the plurality of first electrodes corresponding to a light-shielding region of the plurality of the plurality of light-shielding regions, so as to change widths of the light-transmitting region and the light-shielding region.

In one embodiment, the plurality of first electrodes are strip-shaped electrodes, and the second electrode is a planar electrode.

In one embodiment, the width of the first electrode is in the range of 5 nm to 50 nm.

In one embodiment, the number of first electrodes of the plurality of first electrodes respectively corresponding to the light-transmitting region and the light-shielding region is 3 to 20.

In one embodiment, the liquid crystal layer is a TN type liquid crystal layer.

In one embodiment, the liquid crystal grating also includes, a first substrate arranged between the first polarizer and the first electrodes, and a second substrate arranged between the second polarizer and the second electrode.

In one embodiment, the liquid crystal grating also includes a first alignment film provided on a side of the plurality of first electrodes facing the liquid crystal layer, and a second alignment film provided on a side of the second electrode facing the liquid crystal layer.

According to a second aspect of the present disclosure, a method for controlling a liquid crystal grating is provided, used for the liquid crystal grating provided in the embodiments described above. The method includes: controlling voltage signal applied respectively to the plurality of first electrodes and the second electrode, so as to deflect the liquid crystal molecules in the liquid crystal layer, to form a plurality of light-transmitting regions and a plurality of light-shielding regions arranged alternately.

In one embodiment, the method also includes: changing the number of first electrodes of the plurality of first electrodes respectively corresponding to a light-transmitting region of the plurality of light-transmitting regions and a light-shield region of the plurality of light-shielding regions, by controlling the voltages signal applied respectively to the plurality of first electrodes, so as to change widths of the light-transmitting region and the non-light-transmitting region.

In one embodiment, the width of the first electrode is in a range of 5 nm to 50 nm.

In one embodiment, the number of first electrodes of the plurality of first electrodes respectively corresponding to the light-transmitting region or the light-shielding region is 3 to 20.

In the embodiments of the present disclosure, orientations of the liquid crystal molecules are controlled based on voltages of the plurality of first electrode and the second electrode, so as to form a liquid crystal grating having a plurality of light-transmitting regions and a plurality of light-shielding regions arranged alternately. The grating constant of the formed liquid crystal grating is on the order of nanometers, and then an optical phenomenon in wave optics, such as light interference and diffraction, may be achieved. In addition, the grating constant may be conveniently changed by changing the number of the part of the plurality of first electrodes respectively corresponding to the light-transmitting region and the non-light-transmitting region, in order to adapt to light of different wavelengths.

Further adaptable aspects and scope will be apparent from the description provided herein. It should be understood that various aspects of the present disclosure may be implemented individually or in combination with one or more other aspects. It should also be understood that the description and specific embodiments herein are intended to be illustrative only and are not intended to limit the scope of the present application.

### BRIEF DESCRIPTION OF THE DRAWINGS

The accompanying drawings described herein are used only for the purpose of illustration of the selected embodiments, but not all possible embodiments, and are not intended to limit the scope of the present disclosure, wherein:
Fig. 1 schematically illustrates a schematic diagram of a slit grating in the prior art;
Fig. 2 schematically illustrates a structure diagram of a liquid crystal grating provided in an embodiment of the present disclosure;
Fig. 3 schematically illustrates a schematic diagram of a liquid crystal grating provided in a specific embodiment of the present disclosure;
Fig. 4 illustrates a schematic diagram of a principle for forming a liquid crystal grating provided in embodiments of the present disclosure;
Fig. 5 illustrates a schematic diagram of the optical path difference produced by a liquid crystal grating provided in embodiments of the present disclosure;
Fig. 6 is a schematic flow diagram of a method for driving a liquid crystal grating provided in embodiments of the present disclosure.

Corresponding reference numbers indicate corresponding parts or features throughout these drawings.

### DETAILED DESCRIPTION

Illustrative embodiments will now be described more completely with reference to the accompanying drawings.

Fig. 2 schematically shows a structure diagram of a liquid crystal grating provided in an embodiment of the present disclosure. As shown in Fig. 2, the liquid crystal grating may include a first polarizer 201, a second polarizer 202, a liquid crystal layer 203, a plurality of first electrodes 204 and a second electrode 205. The first polarizer 201 and the second polarizer 202 are arranged opposite to each other. The liquid crystal layer 203 is arranged between the first polarizer 201 and the second polarizer 202. The plurality of first electrodes 204 are disposed on a side of the first polarizer 201 adjacent to the liquid crystal layer. The second electrode 205 is disposed on a side of the second polarizer 202 adjacent to the liquid crystal layer 203. In this embodiment, a width of each first electrode of the plurality of first electrodes 204 may be at nanoscale.

In the embodiment of the present disclosure, a liquid crystal grating having light-transmitting regions and light-shielding regions arranged alternately may be formed by respectively controlling magnitudes of voltages applied to the plurality of the first electrodes and the second electrode. Since the width of each of the first electrodes is at nanoscale, such as several nanometers to several tens of nanometers, a grating constant of the formed liquid crystal grating is on the order of nanometers. Such a liquid crystal grating is a grating in a sense of physical optics. When a light is irradiated onto the liquid crystal grating, a phenomenon of wave optics, such as interference and diffraction of light, may occur.

In one embodiment, the first electrodes may be strip-shaped electrodes, and the second electrode may be a planar electrode. The width of each of the first electrodes may be set between 5 nm and 50 nm.

In order to facilitate the control of voltages of the plurality of first electrodes and the second electrode, in this embodiment, the liquid crystal grating with nanometer scale may further include a control unit connected to the plurality of first electrodes 204 and the second electrode 205. The control unit may be configured to control voltage signals applied respectively to the plurality of first electrodes 204 and the second electrode 205, so as to deflect liquid crystal molecules in the liquid crystal layer 203 to form a plurality of light-transmitting regions and a plurality of light-shielding regions arranged alternately.

Besides, in this embodiment, since the width of the first electrode is at nanoscale, in order to avoid coupling or mutual interference among voltages among the plurality of first electrodes and the second electrode, a small voltage may be applied to the plurality of first electrodes when the liquid crystal grating is formed. Accordingly, a thickness of the liquid crystal layer may be reduced, so as to easily control deflections of the liquid crystal molecules with the small voltage. For example, the thickness of the liquid crystal layer may be at nanoscale.

In one embodiment, the control unit may be further configured to change the number of first electrodes of the plurality of first electrodes 204 corresponding to a light-transmitting region of the light-transmitting regions and the number of first electrodes of the plurality of first electrodes corresponding to a light-shielding region of the light-shielding regions by controlling the voltage signals applied respectively to the plurality of first electrodes 204, so as to change widths of the light-transmitting region and the light-shielding region.

In the embodiment of the present disclosure, the width of each of the first electrodes is at nanoscale, and the number of the first electrodes of the plurality of first electrodes respectively corresponding to the light-transmitting region or the light-shielding region may be changed. And thus the grating constant of the liquid crystal grating may be changed as required. Therefore, the liquid crystal grating may be adapted to interference or diffraction of light of different wavelengths without replacing the liquid crystal grating.

Fig. 3 schematically illustrates a schematic diagram of a liquid crystal grating provided in a specific embodiment of the present disclosure. As shown in Fig. 3, on the basis of the embodiment shown in Fig1, the liquid crystal grating provided in the present embodiment may further include a first substrate 206 and a second substrate 20. The first substrate 206 is arranged between the first polarizer 201 and the plurality of first electrodes 204. The second substrate 207 is arranged between the second polarizer 202 and the second electrode 205. The first substrate 206 and the second substrate 207 serve as supports for supporting the first polarizer 201, the second polarizer 202, the plurality of first electrodes 204 and the second electrode 205.

A principle for forming the liquid crystal grating provided in the present embodiment will be described in detail below by taking the liquid crystal layer being a TN liquid crystal as an example in conjunction with the drawings.

It should be understood that directions of light transmission axes of the first polarizer and the second polarizer may be perpendicular to each other, in order to control the transmission of light through the liquid crystal layer. The first polarizer may convert incident natural light into linearly polarized light which will then enter into the liquid crystal layer. For example, if a voltage is not applied to the liquid crystal layer, the linearly polarized light, the direction of which is rotated by 90° after passing through the liquid crystal layer, may pass through the second polarizer, thus the liquid crystal grating is in a light-transmitting state. If a voltage is applied to the liquid crystal layer, the polarization direction of the linearly polarized light will not be changed after it passes through the liquid crystal layer, and then the polarization direction is perpendicular to the light transmission axis of the second polarizer, so that the linearly polarized light cannot pass through the second polarizer, thus the liquid crystal grating is in a light-shielded state. In the embodiments of the present disclosure, a liquid crystal grating having light-transmitting regions and light-shielding regions arranged alternately in space may be formed by respectively controlling the voltages of the plurality of first electrodes.

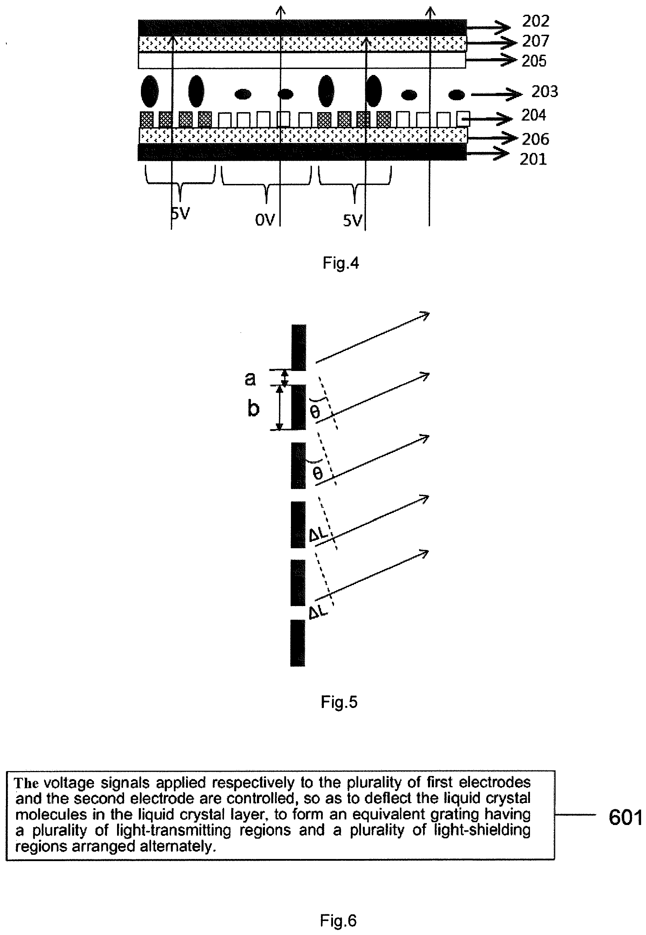

Fig. 4 shows a schematic diagram of a principle for forming a liquid crystal grating provided in an embodiment of the present disclosure. In Fig. 4, a voltage of 5V may be applied to a first one to a fourth one of the plurality of first electrodes 204 according to an order from left to right. The liquid crystal molecules in the liquid crystal layer 203 corresponding to the first one to the fourth one will not change a polarization state of a polarized light, and then the polarized light cannot pass through the second Polarizer 202. And thus a light-shielding region, which has a width of a, of the liquid crystal grating is formed. In addition, a voltage of 0V is applied to a fifth one to a ninth one of the plurality of first electrodes 204 according to the order from left to right. The liquid crystal molecules in the liquid crystal layer 203 corresponding to the fifth one to the ninth one rotate the polarization direction of the polarized light by 90°, and then the polarized light may pass through the second polarizer 202. And thus a light-transmitting region, which has a width of b, of the liquid crystal grating is formed. In turn, a voltage of 5V may be applied to a (9n-8)-th (n is greater than or equal to 1) one to a (9n-5)-th one of the plurality of first electrodes to form another light-shielding region, and a voltage 0V may be applied to a (9n-4)-th one to a 9n-th one of the plurality of first electrodes to form another light-transmitting region.

Since the width of each of the first electrodes is at nanoscale, a liquid crystal grating having a grating constant d (d=a+b) of nanometers may be formed. Such a liquid crystal grating may play a role in a real optical sense of a grating, and may achieve light interference and light diffraction. In addition, according to the configuration of the liquid crystal grating provided in the present embodiment, the number of first electrodes of the plurality of first electrodes respectively corresponding to the light-transmitting regions and the number of first electrodes of the plurality of first electrodes respectively corresponding to the light-shielding region may be changed, so as to conveniently change the grating constant of the liquid crystal grating. And thus the liquid crystal grating may be adapted for different applications without being replaced with a new grating.

In the embodiment shown in Fig. 4, the light-transmitting region may correspond to four of the plurality of first electrodes, and the light-shielding region may correspond to five of the plurality of first electrodes. It should be understood that in another embodiment of the present disclosure, the light-transmitting region and the non-transmitting region may also correspond to other number of first electrodes of the plurality of first electrodes respectively. Moreover, a change of the grating constant may be achieved on the order of nanometers by changing the number of the first electrodes of the plurality of first electrodes corresponding to the light-transmitting region and the light-shielding region, so as to achieve a finer control.

Fig. 5 illustrates a schematic diagram of the optical path difference produced by the liquid crystal grating provided in embodiments of the present disclosure. As shown in Fig. 5, after a light passes through the liquid crystal grating, the optical path difference between diffraction lines respectively corresponding to two adjacent transmission points in the liquid crystal grating is ΔL = d*sinθ, where θ is an angle between a line perpendicular to the diffraction line and a surface of the liquid crystal grating. The phase difference between diffraction lines of two adjacent light-transmitting regions is δ = (2πd/λ)*sinθ. It can be seen that diffraction parameters (for example, which includes the optical path difference and the phase difference) are related to the grating constant d. If the voltage signals respectively applied to the plurality of first electrodes are changed, diffraction factors may be affected so that the liquid crystal grating may be adapted to light of different wavelengths, so as to achieve the effect of interference and diffraction of light of different wavelengths.

In one example of the present disclosure, the first substrate and the second substrate may be glass substrates or quartz substrates. The first electrodes and the second electrode may be made of a transparent conductive material, such as indium tin oxide (ITO), indium zinc oxide (IZO) or zinc oxide, etc. During the preparation, layers of transparent conductive films may be respectively deposited on the first substrate and the second substrate by a process of magnetron sputtering or thermal evaporation, and then patterns of the first electrodes and a pattern of the second electrode may be respectively formed by a patterning process using a conventional mask plate.

In one embodiment, the first polarizer and the second polarizer may be metal wire grid polarizers. A metal thin film may be formed using a metal target material, and then a wire grid polarizer is formed by an etching process. The direction of the light transmission axis of the wire grid polarizer is perpendicular to the direction of a metal wire grid on the wire grid polarizer.

In another embodiment, the first polarizer and the second polarizer may also be iodine series polarizers respectively. The iodine series polarizer may specifically be formed by the following method. A polymer compound polyvinyl alcohol film having a network structure is used as a substrate, and then the film is dipped with strong dichroic iodine. In turn, the film is reduced and stabilized by boric acid aqueous solution, and then is stretched in one direction by 4 to 5 times. After the film is stretched, iodine molecules are neatly adsorbed and arranged on a surface of the film, and the film thus has polarization or polarization detection properties.

Besides, in order to facilitate the arrangement of the liquid crystal molecules in the liquid crystal layer, the liquid crystal grating provided in an embodiment of the present disclosure may further include a first alignment film and a second alignment film respectively provided on the plurality of first electrodes and the second electrode. The first alignment film and the second alignment film are used to orient the liquid crystal molecules in the liquid crystal layer. Specifically, a polyimide (PI) layer may be coated on the first substrate and the second substrate on which the plurality of first electrodes and the second electrode are formed respectively, and subjected to a frictional orientation to arrange molecules of the surface of the PI layer in a uniform direction, thereby forming an alignment film for alignment of the liquid crystal molecules.

Fig. 6 is a schematic flow diagram of a method for driving the liquid crystal grating provided in embodiments of the present disclosure. As shown in Fig. 6, according to one embodiment of the present disclosure, a method for driving the liquid crystal grating is provided. The method may include the following steps.

In a step 601, the voltage signals applied respectively to the plurality of first electrodes and the second electrode are controlled, so as to deflect the liquid crystal molecules in the liquid crystal layer, to form an equivalent grating having a plurality of light-transmitting regions and a plurality of light-shielding regions arranged alternately.

In one embodiment, the method for driving the liquid crystal grating may further include a step of changing the grating constant. This is, the number of first electrodes of the plurality of first electrodes corresponding to the light-transmitting region and the number of first electrodes of the plurality of first electrodes corresponding to the light-shielding region are changed by controlling the voltage signals applied respectively to the plurality of first electrodes, to change the widths of the light-transmitting region and the non-light-transmitting region, thereby changing the grating constant.

In one example, the width of each of the first electrodes may be set between 5 nm and 50 nm.

In one example, the light-transmitting region or the light-shielding region may correspond to 3-20 first electrodes of the plurality of first electrodes, respectively.

In the method for controlling the liquid crystal grating provided in the embodiment of the present disclosure, the liquid crystal grating having a grating constant of nanometers may be formed by respectively controlling the magnitudes of the voltages of the plurality of first electrodes and the second electrode, and the grating constant may be conveniently changed by changing the number of the first electrodes of the plurality of first electrodes respectively corresponding to the light-transmitting region and the non-light-transmitting region, to be suitable for the interference and diffraction of light at different wavelengths.

The flow chart depicted in the disclosure is only an example. Numerous variations of the flow chart or steps described therein may be present without departing from the spirit of the present disclosure. For example, the steps may be performed in a different order, or may be added, deleted, or modified. These variations should be considered to be a part of the aspect requested to be protected.

The direction terms "up", "down", "left", "right", "vertical", "horizontal", "top", "bottom" and derivatives thereof, which are respectively consistent with directions marked in the drawings, should be referred to the disclosure, for the purposes described below. The terms "coat", "on top of", "located at" or "located on the top of" mean that a first element, such as a first structure, exists on a second element, such as a second structure, and that an intermediate element such as an interface structure may exist between the first element and the second element. The term "directly contact" means that a first element such as a first structure is connected to a second element such as a second structure, and that there is no any intermediate conductive, insulating, or semiconductor layer at the interface of the two elements.

Unless the context expressly states otherwise, the singular forms of the words used throughout the specification and the appended claims include plural, and vice versa. Thus, when referring to singular, the plural of the corresponding term is usually included. Similarly, the words "include" and "comprise" will be construed as being included and not exclusive. Likewise, the terms "comprising" and "or" should be construed in an inclusive sense, unless the context clearly dictates otherwise.

The foregoing description of the embodiments has been provided for the purpose of illustration and description. It is not intended to be exhaustive or to limit the present disclosure. Various elements or features in a particular embodiment are not typically limited to the particular embodiment. However, in the appropriate circumstances, these elements and features are interchangeable and may be used in selected embodiments, even if without specific presentation or description. It may also be changed in many ways. Such changes are not to be regarded as a departure from this disclosure, and all such modifications are considered to be within the scope of the present disclosure.

## Claims

1. A liquid crystal grating, comprising:
a first polarizer and a second polarizer arranged opposite to each other;
a liquid crystal layer arranged between the first polarizer and the second polarizer;
a plurality of first electrodes disposed on a side of the first polarizer adjacent to the liquid crystal layer; and
a second electrode disposed on a side of the second polarizer adjacent to the liquid crystal layer,
wherein, a width of each first electrode of the plurality of first electrodes is at nanoscale.

2. The liquid crystal grating according to claim 1, further comprising:
a control unit configured to control voltage signals applied respectively to the plurality of first electrodes and the second electrode, so as to deflect liquid crystal molecules in the liquid crystal layer, to form a plurality of light-transmitting regions and a plurality of light-shielding regions arranged alternately.

3. The liquid crystal grating according to claim 2, wherein, the control unit is further configured to, by controlling the voltage signals applied respectively to the plurality of first electrodes, change the number of first electrodes of the plurality of first electrodes corresponding to a light-transmitting region of the plurality of light-transmitting regions and the number of first electrodes of the plurality of first electrodes corresponding to a light-shielding region of the plurality of light-shielding regions, so as to change widths of the light-transmitting region and the light-shielding region respectively.

4. The liquid crystal grating according to any one of claims 1-3, wherein, the plurality of first electrodes are strip-shaped electrodes, and the second electrode is a planar electrode.

5. The liquid crystal grating according to claim 4, wherein, the width of the first electrode is in a range of 5 nm to 50 nm.

6. The liquid crystal grating according to claim 3, wherein, the number of first electrodes of the plurality of first electrodes respectively corresponding to the light-transmitting region or the light-shielding region is 3 to 20.

7. The liquid crystal grating according to any one of claims 1 to 3 and 5 to 6, wherein, the liquid crystal layer is a TN type liquid crystal layer.

8. The liquid crystal grating according to any one of claims 1 to 3 and 5 to 6, further comprising: a first substrate arranged between the first polarizer and the plurality of first electrodes, and a second substrate arranged between the second polarizer and the second electrode.

9. The liquid crystal grating according to claim 8, further comprising: a first alignment film provided on a side of the plurality of first electrodes facing the liquid crystal layer, and a second alignment film provided on a side of the second electrode facing the liquid crystal layer.

10. A method for controlling the liquid crystal grating according to claim 1, comprising:
controlling voltage signals applied respectively to the plurality of first electrodes and the second electrode, so as to deflect the liquid crystal molecules in the liquid crystal layer, to form a plurality of light-transmitting regions and a plurality of light-shielding regions arranged alternately.

11. The method according to claim 10, further comprising:
changing the number of first electrodes of the plurality of first electrodes respectively corresponding to a light-transmitting region of the plurality of light-transmitting regions and
a light-shielding region of the plurality of light-shielding regions, by controlling the voltage signals applied respectively to the plurality of first electrodes, so as to change widths of the light-transmitting region and the non-light-transmitting region.

12. The method according to claim 10 or 11, wherein, a width of each of the first electrodes is in a range of 5 nm to 50 nm.

13. The method according to claim 12, wherein, the number of first electrodes of the plurality of first electrodes respectively corresponding to the light-transmitting region or the light-shielding region is 3 to 20.
